# EUROPEAN PATENT APPLICATION

(11) **EP 4 726 650 A1**
(43) Date of publication of application: **15.04.2026**
(21) Application number: 25196885.5
(22) Date of filing: 20.08.2025
(51) Int. Cl.: G06T 7/00

(54) **METHOD AND DEVICE FOR INSPECTING SECONDARY BATTERY**

(30) Priority: 08.10.2024 KR 20240136214
(71) Applicant: SAMSUNG SDI CO., LTD., Yongin-si, Gyeonggi-do 17084 (KR)
(72) Inventor: CHO, Hyeong, 17084 Yongin-Si Gyeonggi-do (KR); LEE, Jungkook, 17084 Yongin-Si Gyeonggi-do (KR)
(74) Representative: Gulde & Partner

(57) **Abstract**

A method of inspecting a secondary battery includes receiving, by a processor, a plurality of two-dimensional cross-sectional images of a plurality of secondary batteries, generating, by the processor, a partial three-dimensional model for a part of each of the plurality of secondary batteries based on the plurality of two-dimensional cross-sectional images, and inspecting, by the processor, each of the plurality of secondary batteries based on the partial three-dimensional model.

## Description

### BACKGROUND

### 1. Field

Embodiments relate to a method and device for inspecting secondary batteries.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments include a method of inspecting a secondary battery, the method including receiving, by a processor, a plurality of two-dimensional cross-sectional images of a plurality of secondary batteries from a detector detecting radiation from the plurality of secondary batteries, generating, by the processor, a partial three-dimensional model for a part of each of the plurality of secondary batteries based on the plurality of two-dimensional cross-sectional images, and inspecting, by the processor, each of the plurality of secondary batteries based on the partial three-dimensional model.

The method may further include outputting, by the processor, an inspection result of each of the plurality of secondary batteries.

The plurality of secondary batteries may include a plurality of cylindrical secondary batteries.

The plurality of two-dimensional cross-sectional images may be generated by photographing the plurality of secondary batteries without rotating the plurality of secondary batteries.

The plurality of two-dimensional cross-sectional images may include first two-dimensional cross-sectional images generated by photographing the plurality of secondary batteries and second two-dimensional cross-sectional images obtained by copying the first two-dimensional cross-sectional images.

The plurality of two-dimensional cross-sectional images may be generated by photographing the plurality of secondary batteries while rotating the plurality of secondary batteries according to a predetermined range. The first two-dimensional cross-sectional images may be generated by photographing the plurality of secondary batteries while rotating the plurality of secondary batteries according to a predetermined range.

The predetermined range may be based on a diameter of the plurality of secondary batteries.

The predetermined range may be greater than 0 degrees and less than or equal to 20 degrees.

The partial three-dimensional model may represent a partial three-dimensional shape of each secondary battery of the plurality of secondary batteries associated with the predetermined range.

A number of the plurality of two-dimensional cross-sectional images may be less than or equal to a predetermined threshold.

The plurality of two-dimensional cross-sectional images may include first two-dimensional cross-sectional images generated by photographing an upper portion of each of the plurality of secondary batteries and second two-dimensional cross-sectional images generated by photographing a lower portion of each of the plurality of secondary batteries.

The plurality of two-dimensional cross-sectional images may be X-ray images of the plurality of secondary batteries.

A diameter of each of the plurality of secondary batteries may be 18 mm to 46 mm.

The inspecting may include obtaining cross-sectional inspection images of the plurality of secondary batteries based on the partial three-dimensional models, and inspecting each of the plurality of secondary batteries based on the cross-sectional inspection images.

Inspecting each of the plurality of secondary batteries may include inspecting an overhang based on a difference between a length of a cathode plate and a length of an anode plate of each of the plurality of secondary batteries.

Embodiments include a computer-readable non-transitory recording medium having recorded thereon instructions for executing the instant method on a computer.

Embodiments include a device for inspecting a secondary battery, the device including a generator configured to emit X-rays toward a plurality of secondary batteries, a detector facing the generator with respect to the plurality of secondary batteries, the detector being configured to detect the X-rays, a two-dimensional cross-sectional image generator configured to generate a plurality of two-dimensional cross-sectional images of the plurality of secondary batteries based on data received from the detector, a three-dimensional model generator configured to generate a partial three-dimensional model for a part of each of the plurality of secondary batteries based on the plurality of two-dimensional cross-sectional images, and an inspection device configured to inspect each of the plurality of secondary batteries based on the partial three-dimensional model.

Distances between the generator and each of the plurality of secondary batteries may be a same distance.

The device may further include a rotation driver configured to rotate the plurality of secondary batteries by a predetermined range, wherein the plurality of two-dimensional cross-sectional images are generated by photographing the plurality of secondary batteries while rotating the plurality of secondary batteries according to the predetermined range.

The plurality of secondary batteries may include a plurality of cylindrical secondary batteries, and the partial three-dimensional model may represent a partial three-dimensional shape of each of the plurality of cylindrical secondary batteries associated with the predetermined range.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail exemplary embodiments with reference to the attached drawings, in which:
FIG. 1 is a perspective view showing an example of a secondary battery 100 according to some embodiments of the present disclosure;
FIG. 2 is a cross-sectional view showing an example of a secondary battery 100 according to some embodiments of the present disclosure;
FIG. 3 is a diagram showing an example of a secondary battery inspection device according to some embodiments of the present disclosure;
FIG. 4 is a diagram showing an example of the configuration of an information processing system according to some embodiments of the present disclosure;
FIG. 5 is a diagram showing an example in which a two-dimensional cross-sectional image of a secondary battery is generated according to some embodiments of the present disclosure;
FIG. 6 is a diagram showing an example in which a partial three-dimensional model is generated according to some embodiments of the present disclosure;
FIG. 7 is a diagram showing an example of a method of performing an inspection of a secondary battery according to some embodiments of the present disclosure;
FIG. 8 is a diagram showing an example of the structure of a secondary battery inspection device according to some embodiments of the present disclosure; and
FIG. 9 is a flowchart showing an example of a secondary battery inspection method according to some embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

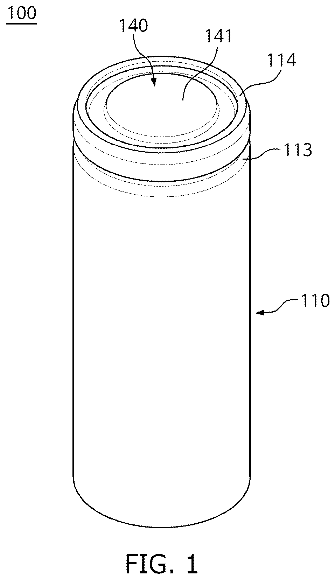

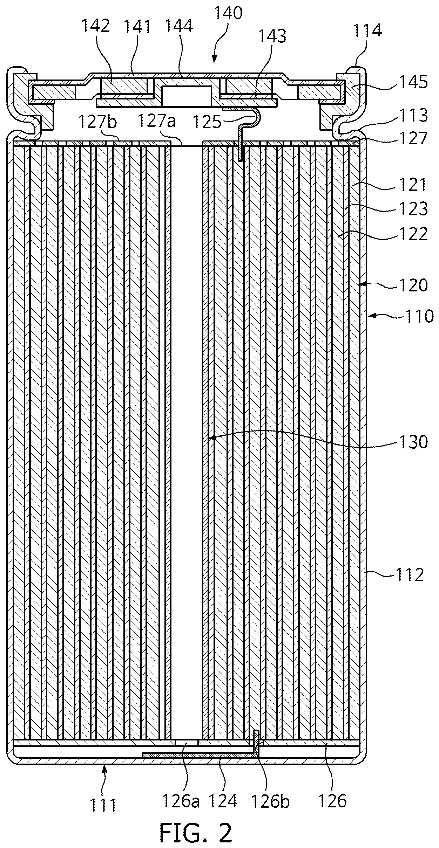

FIG. 1 is a perspective view showing an example of a secondary battery 100 according to some embodiments of the present disclosure, and FIG. 2 is a cross-sectional view showing an example of a secondary battery 100 according to some embodiments of the present disclosure. Referring to FIGS. 1 and 2, the secondary battery 100 according to one or more embodiments of the present disclosure may include a cylindrical can 110, an electrode assembly 120, and a cap assembly 140. In addition, in some embodiments, secondary battery 100 may include a center pin 130. In addition, in the secondary battery 100 according to one or more embodiments of the present disclosure, the cap assembly 140 may also perform a current interruption operation and, thus, may sometimes be referred to as a current interrupt device (CID).

The cylindrical can 110 may have a substantially circular bottom part 111 and a cylindrical sidewall 112 upwardly extending (e.g., extending a predetermined length) from a circumference (or a periphery) of the bottom part 111. During the manufacturing process of the secondary battery 100, the top portion of the cylindrical can 110 is open. Therefore, during the assembly process of the secondary battery 100, the electrode assembly 120 and the center pin 130 may be inserted into the cylindrical can 110 together with an electrolyte. The cylindrical can 110 may be made of, for example, steel, stainless steel, aluminum, aluminum alloy, or an equivalent thereof but is not limited to.

In addition, to prevent the cap assembly 140 from escaping to the outside (e.g., being separated from the cylindrical can 110), with respect to the cap assembly 140, the cylindrical can 110 may include a beading part (e.g., a bead) 113 recessed toward the inside at the bottom of the cap assembly 140 and a crimping part (e.g., a crimp) 114 bent inwardly at the top thereof.

The electrode assembly 120 may be accommodated inside the cylindrical can 110. The electrode assembly 120 may include a negative electrode plate 121 coated with a negative electrode active material (e.g., graphite, carbon, etc.) on a negative electrode current collector plate, a positive electrode plate 122 coated with a positive electrode active material (e.g., a transition metal oxide, such as LiCoO2, LiNiO2, Limn2O4, etc.) on a positive electrode current collector plate, and a separator 123 positioned between the negative electrode plate 121 and the positive electrode plate 122 to prevent a short circuit therebetween while allowing the movement of lithium ions therethrough. In addition, the negative electrode plate 121, the positive electrode plate 122, and the separator 123 may be wound in a substantially cylindrical shape. In an embodiment, the negative electrode current collector may be made of copper (Cu) foil, the positive electrode current collector may be made of aluminum (Al) foil, and the separator may be made of polyethylene (PE) or polypropylene (PP), but the present disclosure is not limited thereto.

In addition, a negative electrode tab 124 protruding and extending a certain length (e.g., a suitable length) downwardly from the electrode assembly 120 may be welded to the negative electrode plate 121, and a positive electrode tab 125 protruding and extending a certain length (e.g., a suitable length) upwardly from the electrode assembly 120 may be welded to the positive electrode plate 122, but an opposite configuration is possible. In addition, for example, the negative electrode tab 124 may be made of copper (Cu) or nickel (Ni), and the positive electrode tab 125 may be made of aluminum (Al), but the present disclosure is not limited thereto.

In addition, the negative electrode tab 124 of the electrode assembly 120 may be welded to the bottom part 111 of the cylindrical can 110. Therefore, the cylindrical can 110 may act as a negative electrode. Of course, in other embodiments, the positive electrode tab 125 may be welded to the bottom part 111 of the cylindrical can 110, and in such an embodiment, the cylindrical can 110 may act as a positive electrode.

In addition, the secondary battery 100 may include a first insulation plate 126 coupled to the cylindrical can 110, may have a first hole 126a in the center and one or more second holes 126b outside (e.g., peripheral to the center) thereof, and may be interposed between the electrode assembly 120 and the bottom part 111. The first insulation plate 126 prevents the electrode assembly 120 from electrically contacting the bottom part 111 of the cylindrical can 110. By way of example, the first insulation plate 126 prevents the positive electrode plate 122 of the electrode assembly 120 from electrically contacting the bottom part 111. The first hole 126a allows the gas to quickly move upwardly through the center pin 130 if (or when) a large amount of gas is generated due to an abnormality of the secondary battery 100, and the one or more second holes 126b allow the negative electrode tab 124 to penetrate (or extend) therethrough and be welded to the bottom part 111.

In addition, the secondary battery 100 may include a second insulation plate 127 coupled to the cylindrical can 110, having a first hole 127a in the center and a plurality of second holes 127b formed outside thereof (e.g. located peripherally to the center), and may be interposed between the electrode assembly 120 and the cap assembly 140. The second insulation plate 127 prevents the electrode assembly 120 from electrically contacting the cap assembly 140. By way of example, the second insulation plate 127 prevents the negative electrode plate 121 of the electrode assembly 120 from electrically contacting the cap assembly 140. The first hole 127a allows the gas to quickly move toward the cap assembly 140 if (or when) a large amount of gas is generated due to an abnormality of the secondary battery, and the second holes 127b allow the positive electrode tab 125 to penetrate (or extend) therethrough and be welded to the cap assembly 140. In addition, the remaining second holes 127b allow an electrolyte to quickly flow into the electrode assembly 120 in an electrolyte injection process.

In addition, the diameters of the first holes 126a and 127a of the first and second insulation plates 126 and 127 are formed to be smaller than the diameter of the center pin 130, thereby preventing the center pin 130 from electrically contacting the bottom part 111 of the cylindrical can 110 or the cap assembly 140 due to an external impact.

The center pin 130 has a shape of a hollow circular pipe and may be coupled to the center of the electrode assembly 120. The center pin 130 may be made of, for example, steel, stainless steel, aluminum, an aluminum alloy, or polybutylene terephthalate, but the present disclosure is not limited thereto. The center pin 130 suppresses (or prevents) deformation of the electrode assembly 120 during charging and discharging of the battery and acts as a passage for gas generated inside the secondary battery. Of course, in some embodiments, the center pin 130 may be omitted.

The cap assembly 140 may include a top plate 141, a middle plate 142, an insulation plate 143, and a bottom plate 144. The middle plate 142 is located below the top plate 141 and may have a substantially flat shape. When viewed from the bottom, the insulation plate 143 may be formed in a circular ring shape having a suitable width (e.g., a predetermined width). In addition, the insulation plate 143 insulates the middle plate 142 and the bottom plate 144 from each other. The insulation plate 143 may be interposed between, for example, the middle plate 142 and the bottom plate 144 to then be ultrasonically welded, but the present disclosure is not limited thereto.

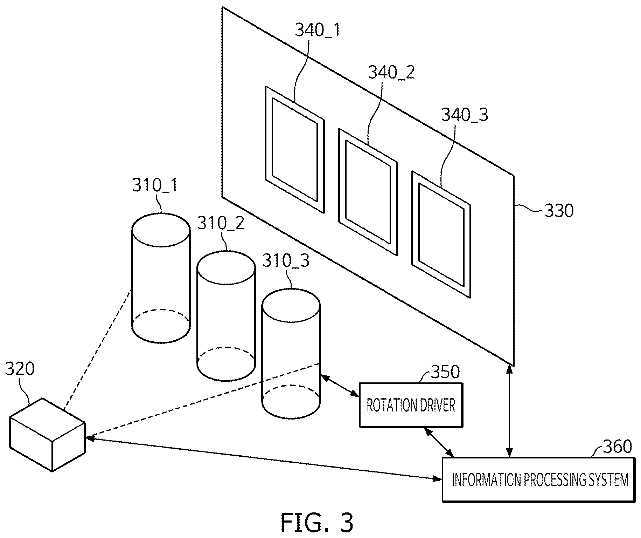

FIG. 3 is a diagram showing an example of a secondary battery inspection device according to some embodiments of the present disclosure. In an embodiment, the secondary battery inspection device may include a generator 320 that emits radiation (e.g., X-rays) toward a plurality of secondary batteries 310_1 to 310_3, a detector 330 that faces the generator 320 with respect to the plurality of secondary batteries 310_1 to 310_3 and detects the radiation (e.g., X-rays), and an information processing system 360 that performs an inspection on each of the plurality of secondary batteries 310_1 to 310_3. Here, each of the plurality of secondary batteries 310_1 to 310_3 may be a cylindrical secondary battery. Further, the diameter of each of the plurality of cylindrical secondary batteries 310_1 to 310_3 may be 18 mm to 46 mm, but the diameter may vary.

In an embodiment, the information processing system 360 may generate a plurality of two-dimensional cross-sectional images of the plurality of secondary batteries 310_1 to 310_3 based on the data received from the detector 330. Here, the data received from the detector 330 may be associated with X-ray images 340_1 to 340_3 detected for each of the plurality of secondary batteries 310_1 to 310_3, respectively. In another example, the information processing system 360 may receive a plurality of two-dimensional cross-sectional images of the plurality of secondary batteries 310_1 to 310_3 from the detector 330.

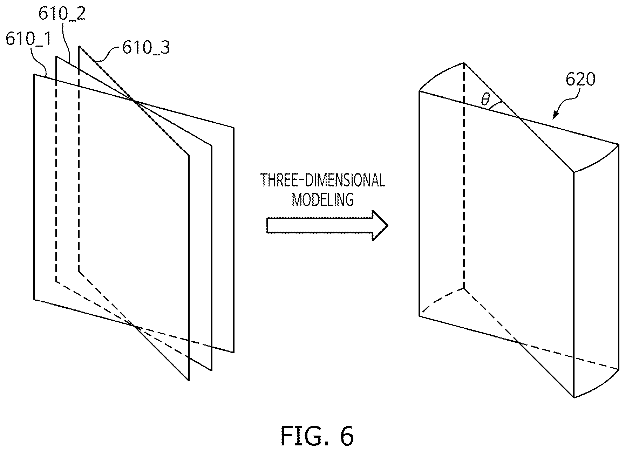

In an embodiment, the information processing system 360 may generate a partial three-dimensional model for a part of each of the plurality of secondary batteries 310_1 to 310_3 based on the plurality of two-dimensional cross-sectional images. Then, an inspection may be performed on each of the plurality of secondary batteries 310_1 to 310_3 based on the partial three-dimensional models. An example of the partial three-dimensional model will be described in detail later with reference to FIG. 6.

In an embodiment, the secondary battery inspection device may further include a rotation driver 350. Here, the information processing system 360 may control the rotation driver 350 to rotate the plurality of secondary batteries 310_1 to 310_3 by a predetermined range. Accordingly, the plurality of two-dimensional cross-sectional images generated by the information processing system 360 may be images generated by photographing the plurality of secondary batteries 310_1 to 310_3 while rotating the plurality of secondary batteries 310_1 to 310_3 according to the predetermined range. Here, the predetermined range may be determined based on the diameter of the plurality of secondary batteries 310_1 to 310_3. For example, the predetermined range may be greater than 0 degrees and less than or equal to 20 degrees but the range may vary, and the range over which they rotate may increase as the diameter of the plurality of secondary batteries 310_1 to 310_3 increases. Further, the predetermined range may be less than 180 degrees.

Further, the secondary battery inspection device may further include an information transmitting element (not shown) for transmitting information between the information processing system 360, the detector 330, and the rotation driver 350.

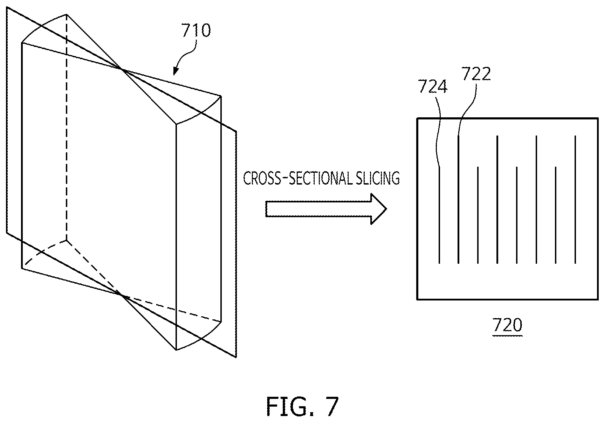

In an embodiment, the information processing system 360 may obtain cross-sectional inspection images of the plurality of secondary batteries 310_1 to 310_3 based on the partial three-dimensional models. Further, the information processing system 360 may perform inspections on the plurality of secondary batteries 310_1 to 310_3 based on the cross-sectional inspection images. Here, the inspections on the plurality of secondary batteries 310_1 to 310_3 may include an overhang inspection based on the difference between the length of the cathode plate and the length of the anode plate of each of the plurality of secondary batteries 310_1 to 310_3. An example in which the information processing system 360 performs inspections on the plurality of secondary batteries 310_1 to 310_3 will be described in detail later with reference to FIG. 7.

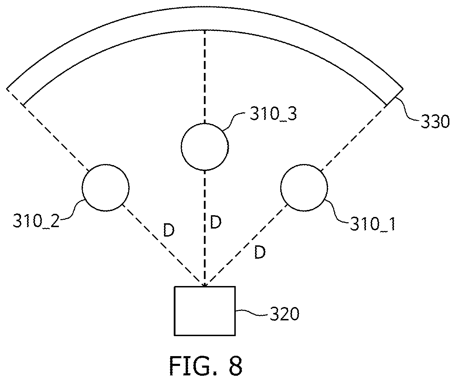

In an embodiment, the plurality of secondary batteries 310_1 to 310_3 may be arranged in a single line. In another example, the plurality of secondary batteries 310_1 to 310_3 may be arranged in an arc shape. In the case of an arc shape, the distances between the generator 320 and each of the plurality of secondary batteries 310_1 to 310_3 may be the same. An example in which the plurality of secondary batteries 310_1 to 310_3 is arranged in an arc shape will be described in detail later with reference to FIG. 8.

The number of the plurality of secondary batteries 310_1 to 310_3 is shown as three in FIG. 3 but the number of secondary batteries may vary, and the number of secondary batteries to be inspected under the condition that the distortion of radiation (e.g., X-rays) emitted from the generator 320 is less than or equal to a threshold may increase.

With this configuration, the inspection time for the secondary batteries can be reduced by inspecting the secondary batteries while rotating the secondary batteries by only a predetermined range rather than 360 degrees. Further, by using radiation (e.g., X-ray) images instead of CT images, the inspection cost can be reduced and the plurality of secondary batteries can be inspected quickly.

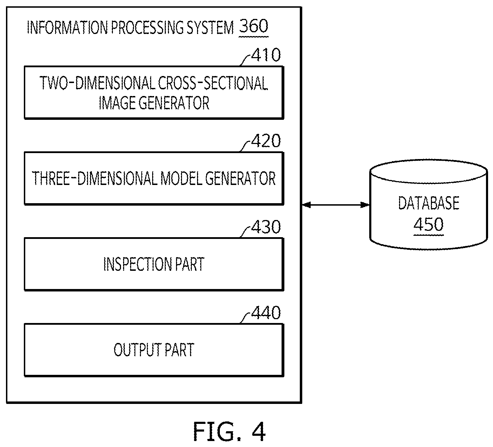

FIG. 4 is a diagram showing an example of the configuration of an information processing system 360 according to some embodiments of the present disclosure. In an embodiment, the information processing system 360 may include a two-dimensional cross-sectional image generator 410, a three-dimensional model generator 420, an inspection part 430, and an output part 440. The two-dimensional cross-sectional image generator 410 may receive data from a detector (e.g., 330 in FIG. 3) that detects X-rays emitted toward a plurality of secondary batteries. Further, the two-dimensional cross-sectional image generator 410 may generate a plurality of two-dimensional cross-sectional images of the plurality of secondary batteries. The plurality of two-dimensional cross-sectional images generated may be stored in a database 450.

In an embodiment, the plurality of two-dimensional cross-sectional images generated by the two-dimensional cross-sectional image generator 410 may be cross-sectional images generated by photographing the plurality of secondary batteries without rotating the plurality of secondary batteries. In this case, the plurality of two-dimensional cross-sectional images may be generated by copying the cross-sectional images generated by initially photographing the secondary batteries. For example, the plurality of two-dimensional cross-sectional images may include first two-dimensional cross-sectional images generated by photographing the plurality of secondary batteries and second two-dimensional cross-sectional images obtained by copying the first two-dimensional cross-sectional images. Moreover, the plurality of two-dimensional cross-sectional images may further include third two-dimensional cross-sectional images obtained by copying the first two-dimensional cross-sectional images generated by photographing the plurality of secondary batteries.

In an embodiment, the plurality of two-dimensional cross-sectional images generated by the two-dimensional cross-sectional image generator 410 may be cross-sectional images generated by photographing the plurality of secondary batteries while rotating the plurality of secondary batteries according to a predetermined range. Here, the predetermined range may be determined based on the diameter of the plurality of secondary batteries. For example, the predetermined range may be greater than 0 degrees and less than or equal to 20 degrees but other ranges are possible.

In an embodiment, the number of the plurality of two-dimensional cross-sectional images may be less than or equal to a predetermined threshold. Here, the predetermined threshold may be determined based on the inspection time and the accuracy of the inspection. For example, the number of the plurality of two-dimensional cross-sectional images may be at least three or more, but the number of two-dimensional cross-sectional images may be increased for the accuracy of the inspection, and the number of two-dimensional cross-sectional images may be decreased for a quick inspection.

In an embodiment, the plurality of two-dimensional cross-sectional images may be X-ray images of the plurality of secondary batteries. Further, the plurality of two-dimensional cross-sectional images may include first two-dimensional cross-sectional images generated by photographing the upper portion of each of the plurality of secondary batteries and second two-dimensional cross-sectional images generated by photographing the lower portion of each of the plurality of secondary batteries. Accordingly, the two-dimensional cross-sectional images of the secondary batteries can be obtained more accurately.

The three-dimensional model generator 420 may generate a partial three-dimensional model for a part of each of the plurality of secondary batteries based on the plurality of two-dimensional cross-sectional images generated by the two-dimensional cross-sectional image generator 410. Here, the partial three-dimensional model may refer to a three-dimensional model generated by three-dimensionally modeling only a part of the secondary battery rather than the entire secondary battery. That is, the partial three-dimensional model may represent a partial three-dimensional shape of each secondary battery associated with the predetermined range, which is a range over which the plurality of secondary batteries rotates for inspection. The generated partial three-dimensional models may be stored in the database 450.

The inspection part 430 may perform an inspection on each of the plurality of secondary batteries based on the partial three-dimensional models generated by the three-dimensional model generator 420. Specifically, the inspection part 430 may obtain cross-sectional inspection images of the plurality of secondary batteries based on the partial three-dimensional models. Here, the cross-sectional inspection image may represent a cross-sectional image obtained by slicing the partial three-dimensional model. Further, the inspection part 430 may perform an inspection on each of the plurality of secondary batteries based on the cross-sectional inspection images. In this case, the inspection on each of the plurality of secondary batteries may include an overhang inspection based on the difference between the length of the cathode plate and the length of the anode plate of each of the plurality of secondary batteries but other bases are possible, and may include various inspections that may be performed using the partial three-dimensional models or cross-sections of the partial three-dimensional models. The cross-sectional inspection images generated by the inspection part 430 may be stored in the database 450.

The output part 440 may output the inspection results performed on each of the plurality of secondary batteries. For example, the output part 440 may output a cross-sectional inspection image and an analysis result (e.g., good, bad, etc.) for the cross-sectional inspection image for each of the plurality of secondary batteries. Further, the output part 440 may output identification information for each of the plurality of secondary batteries to be inspected. The inspection results may be stored in the database 450.

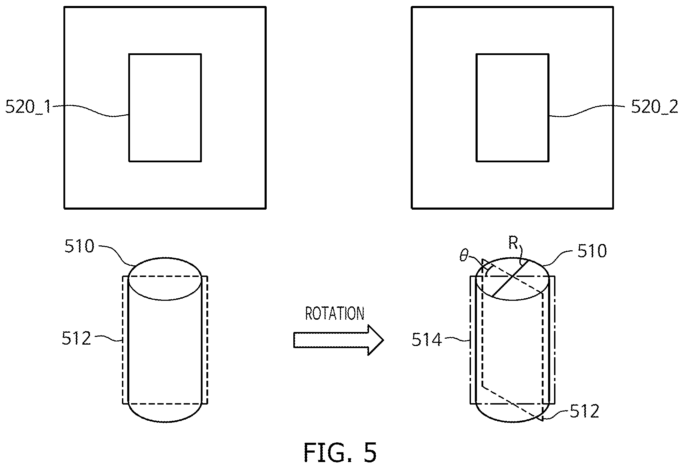

The internal components of the information processing system 360 shown in FIG. 4 are merely examples, and in some embodiments, other components may be further included in addition to the internal components shown, some components may be omitted, and some processes may be performed by other components or external systems. Moreover, the internal components of the information processing system 360 have been described by dividing them by function in FIG. 5, which, however, does not necessarily mean that the internal components are physically separated.

FIG. 5 is a diagram showing an example in which a two-dimensional cross-sectional image 520 of a secondary battery 510 is generated according to some embodiments of the present disclosure. In an embodiment, the secondary battery 510 may be a cylindrical secondary battery. In this case, a first cross-section 512 of the secondary battery 510 may be photographed using X-rays. Accordingly, at least one processor of an information processing system (e.g., 360 in FIG. 3) may generate a first two-dimensional cross-sectional image 520_1 of the secondary battery 510. Here, the first two-dimensional cross-sectional image 520_1 may be an X-ray image of the secondary battery 510.

In an embodiment, the processor may generate a second two-dimensional cross-sectional image 520_2 of the secondary battery 510. Specifically, the secondary battery 510 may be rotated by a predetermined range θ after generating the first two-dimensional cross-sectional image 520_1. Further, a second cross-section 514 of the secondary battery 510 may be photographed using X-rays. Accordingly, the processor may generate the second two-dimensional cross-sectional image 520_2 of the secondary battery 510.

In an embodiment, the predetermined range θ, which is a range over which the secondary battery 510 rotates, may be determined based on the diameter R of the secondary battery 510. For example, the predetermined range θ may be greater than 0 degrees and less than or equal to 20 degrees, but other ranges are possible. The larger the diameter R of the secondary battery 510, the more difficult it may be to obtain an accurate two-dimensional cross-sectional image due to the high capacity and density and the active material characteristics of the secondary battery 510. In this case, the accuracy of the inspection can be improved by increasing the range over which the secondary battery 510 rotates and increasing the number of two-dimensional cross-sectional images to be photographed.

In an embodiment, as the secondary battery 510 is cylindrical, all cross-sections of the secondary battery 510 may be the same or similar. Accordingly, the second two-dimensional cross-sectional image 520_2 of the secondary battery 510 may be generated without rotating the secondary battery 510. For example, the second two-dimensional cross-sectional image 520_2 may be generated by re-photographing the secondary battery 510 without rotating it. In another example, the second two-dimensional cross-sectional image 520_2 may be generated by copying the first two-dimensional cross-sectional image 520_1. That is, a plurality of two-dimensional cross-sectional images may be generated with only one instance of photographing of the secondary battery 510.

FIG. 6 is a diagram showing an example in which a partial three-dimensional model 620 is generated according to some embodiments of the present disclosure. In an embodiment, at least one processor of an information processing system (e.g., 360 in FIG. 3) may generate a partial three-dimensional model 620 of a part of a secondary battery based on a plurality of two-dimensional cross-sectional images 610_1 to 610_3. Here, the partial three-dimensional model 620 may represent a partial three-dimensional shape of the secondary battery associated with a predetermined range θ, which is a range over which the secondary battery rotates. Because all cross-sections of the cylindrical secondary battery are the same or similar, three-dimensional modeling of the entire secondary battery may not be necessary. Accordingly, the partial three-dimensional model 620 may be a model generated by three-dimensionally modeling only a part of the secondary battery rather than the entire secondary battery. Further, the method of generating the partial three-dimensional model 620 from the plurality of two-dimensional cross-sectional images 610_1 to 610_3 may similarly use a CT image stacking method but various three-dimensional modeling methods may be applied.

In an embodiment, the number of the plurality of two-dimensional cross-sectional images may be less than or equal to a predetermined threshold. Here, the predetermined threshold may be determined based on the inspection time and the accuracy of the inspection. For example, the number of the plurality of two-dimensional cross-sectional images may be at least three or more, but the number of two-dimensional cross-sectional images may be increased for the accuracy of the inspection, and the number of two-dimensional cross-sectional images may be decreased for a quick inspection.

FIG. 7 is a diagram showing an example of a method of performing an inspection of a secondary battery according to some embodiments of the present disclosure. In an embodiment, at least one processor of an information processing system (e.g., 360 in FIG. 3) may perform an inspection of a secondary battery based on a partial three-dimensional model 710. Specifically, the processor may obtain a cross-sectional inspection image 720 of the secondary battery based on the partial three-dimensional model 710. In this case, the processor may obtain the cross-sectional inspection image 720 by slicing the cross-section of the partial three-dimensional model 710.

Further, the processor may perform an inspection on the secondary battery based on the cross-sectional inspection image 720. Here, the inspection on the secondary battery may include an overhang inspection (e.g., inspect an overhang) based on the difference between the length of the cathode plate 722 and the length of the anode plate 724 of the secondary battery. That is, the processor may check the difference between the length of the cathode plate 722 and the length of the anode plate 724 of the secondary battery through the cross-sectional inspection image 720, and determine the internal structure and condition of the secondary battery.

With this configuration, an inspection of the secondary battery can be performed quickly using the partial three-dimensional model without performing three-dimensional modeling of the entire secondary battery. Accordingly, a safety inspection of the secondary battery can be easily performed.

FIG. 8 is a diagram showing an example of the structure of a secondary battery inspection device according to some embodiments of the present disclosure. In an embodiment, the secondary battery inspection device may include a generator 320 that emits X-rays toward a plurality of secondary batteries 310_1 to 310_3, and a detector 330 that faces the generator 320 with respect to the plurality of secondary batteries 310_1 to 310_3 and detects the X-rays. Here, the distances D between the generator 320 and each of the plurality of secondary batteries 310_1 to 310_3 may be the same. That is, the plurality of secondary batteries 310_1 to 310_3 may be arranged in an arc shape. In this case, the detector 330 may also be formed in an arc shape. Accordingly, the distortion of the X-ray images of the plurality of secondary batteries 310_1 to 310_3 detected by the detector 330 can be reduced.

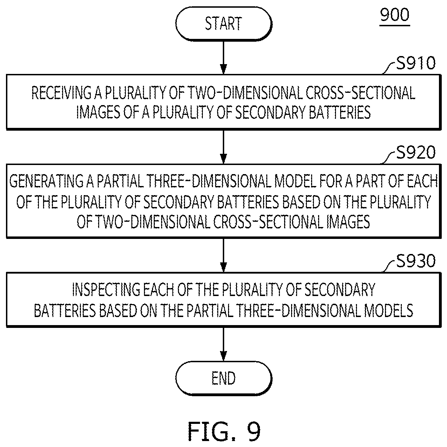

FIG. 9 is a flowchart showing an example of a secondary battery inspection method 900 according to some embodiments of the present disclosure. In an embodiment, the secondary battery inspection method 900 may be performed by at least one processor (e.g., at least one processor of an information processing system). The secondary battery inspection method 900 may begin with the processor receiving a plurality of two-dimensional cross-sectional images of a plurality of secondary batteries (S910). Here, the plurality of secondary batteries may be cylindrical secondary batteries. Further, the diameter of each of the plurality of secondary batteries may be 18 mm to 46 mm, but the diameter may vary.

Then, the processor may generate a partial three-dimensional model for a part of each of the plurality of secondary batteries based on the plurality of two-dimensional cross-sectional images (S920). Here, the plurality of two-dimensional cross-sectional images may be X-ray images of the plurality of secondary batteries. Further, the partial three-dimensional model may represent a partial three-dimensional shape of each secondary battery associated with a predetermined range.

Then, the processor may perform an inspection of each of the plurality of secondary batteries based on the partial three-dimensional models (S930). Specifically, the processor may obtain cross-sectional inspection images of the plurality of secondary batteries based on the partial three-dimensional models. Further, the processor may perform an inspection on each of the plurality of secondary batteries based on the cross-sectional inspection images. Here, the inspection of each of the plurality of secondary batteries may include an overhang inspection based on the difference between the length of the cathode plate and the length of the anode plate of each of the plurality of secondary batteries. Further, the processor may output the inspection results performed on each of the plurality of secondary batteries.

In an embodiment, the plurality of two-dimensional cross-sectional images may be cross-sectional images generated by photographing the plurality of secondary batteries without rotating the plurality of secondary batteries. In this case, the plurality of two-dimensional cross-sectional images may include first two-dimensional cross-sectional images generated by photographing the plurality of secondary batteries and second two-dimensional cross-sectional images obtained by copying the first two-dimensional cross-sectional images.

In an embodiment, the plurality of two-dimensional cross-sectional images may be cross-sectional images generated by photographing the plurality of secondary batteries while rotating the plurality of secondary batteries according to a predetermined range. Here, the predetermined range may be determined based on the diameter of the plurality of secondary batteries. For example, the predetermined range may be greater than 0 degrees and less than or equal to 20 degrees.

In an embodiment, the number of the plurality of two-dimensional cross-sectional images may be less than or equal to a predetermined threshold. Further, the plurality of two-dimensional cross-sectional images may include first two-dimensional cross-sectional images generated by photographing the upper portion of each of the plurality of secondary batteries and second two-dimensional cross-sectional images generated by photographing the lower portion of each of the plurality of secondary batteries.

The method described above may be provided as a computer program stored on a computer-readable recording medium for execution by a computer. The medium may continue to store computer-executable programs or temporarily store them for execution or download. Moreover, the medium may be a variety of recording or storage means in the form of a single piece of hardware or a combination of several pieces of hardware, and is not limited to media directly connected to a computer system but may be those distributed over a network as well. Examples of media may be those configured to store program instructions, including magnetic media such as hard disks, floppy disks, and magnetic tapes, optical recording media such as CD-ROMs and DVDs, magneto-optical media such as floptical disks, ROM, RAM, flash memory, etc. Furthermore, examples of other media may include recording or storage media managed by app stores that distribute applications, sites that supply or distribute various other software, servers, etc.

The methods, operations, or techniques of the present disclosure may be implemented by a variety of means. For example, these techniques may be implemented in hardware, firmware, software, or combinations thereof. Those having ordinary skill in the art will appreciate that the various example logic blocks, modules, circuits, and algorithm steps described in conjunction with the disclosure herein may be implemented in electronic hardware, computer software, or a combination of both. To clearly describe this interchangeability of hardware and software, the various example components, blocks, modules, circuits, and steps have been described above generally in terms of their functionality. Whether such functionality is implemented in hardware or software depends on the particular application and design requirements imposed on the overall system. Those having ordinary skill in the art may implement the described functionality in a variety of ways for each particular application, but such implementations should not be construed as departing from the scope of the present disclosure.

In hardware implementations, the processing units used to perform the techniques may be implemented within one or more ASICs, DSPs, GPUs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computers, or combinations thereof.

Therefore, the various example logic blocks, modules, and circuits described in conjunction with the present disclosure may be implemented or performed in any combination of general-purpose processors, DSPs, ASICs, FPGAs or other programmable logic devices, discrete gate or transistor logic, discrete hardware components, or those designed to perform the functions described herein. The general-purpose processor may be a microprocessor, but in another example, the processor may be any conventional processor, controller, microcontroller, or state machine. The processor may also be implemented as a combination of computing devices, for example, a combination of a DSP and a microprocessor, a plurality of microprocessors, one or more microprocessors in conjunction with a DSP core, or any other configurations.

In firmware and/or software implementations, the techniques may be implemented as instructions stored on a computer-readable medium such as random-access memory (RAM), read-only memory (ROM), non-volatile random-access memory (NVRAM), PROM (programmable read-only memory), EPROM (erasable programmable read-only memory), EEPROM (electrically erasable PROM), flash memory, compact discs (CDs), magnetic or optical data storage devices, etc. The instructions may be executable by one or more processors, and may cause the processor(s) to perform certain aspects of the functionality described in the present disclosure.

If implemented in software, the techniques described above may be stored on or transmitted via a computer-readable medium as one or more instructions or code. The computer-readable media include both computer storage media and communication media, including any media that facilitate the transmission of a computer program from one place to another. The storage media may be any available media that can be accessed by a computer. By way of non-limiting example, the computer-readable media may include RAM, ROM, EEPROM, CD-ROM or other optical disc storages, magnetic disk storage or other magnetic storage devices, or any other media that can be used to transport or store the desired program code in the form of instructions or data structures and that can be accessed by a computer. Moreover, any access is appropriately made to a computer-readable medium.

For example, if software is transmitted from websites, servers, or other remote sources using coaxial cables, fiber optic cables, twisted pair cables, digital subscriber lines (DSLs), or wireless technologies such as infrared, radio, and microwave, then the coaxial cables, fiber optic cables, twisted pair cables, digital subscriber lines, or wireless technologies such as infrared, radio, and microwave are included within the definition of media. The disks and discs used herein include CDs, laser discs, optical discs, digital versatile discs (DVDs), floppy disks, and Blu-ray discs, wherein the disks typically reproduce data magnetically, whereas the discs reproduce data optically using lasers. Combinations of the above should also be included within the scope of computer-readable media.

The software modules may reside in RAM memory, flash memory, ROM memory, EPROM memory, EEPROM memory, registers, a hard disk, a removable disk, a CD-ROM, or any other forms of storage media known. An example storage medium may be connected to the processor such that the processor can read information from or write information to the storage medium. In another example, the storage medium may be integrated into the processor. The processor and storage medium may be present within an ASIC. The ASIC may be present within a user terminal. In yet another example, the processor and storage medium may be present as separate components in a user terminal.

In order to check the safety of a secondary battery, it is necessary to determine its internal structure and condition by seeing through the inside of the secondary battery. A conventional secondary battery inspection method takes a CT (computed tomography) image while rotating the secondary battery 360 degrees and determines the internal structure and condition of the secondary battery. However, such a conventional method has problems that it takes a lot of inspection time and investment costs, and a substantial inspection space is needed due to a large CT imaging device.

According to some embodiments of the present disclosure, the inspection time for the secondary batteries can be reduced by inspecting the secondary batteries while rotating the secondary batteries by only a predetermined range rather than 360 degrees. Further, by using radiation (e.g., X-ray) images instead of CT images, the inspection cost can be reduced and the plurality of secondary batteries can be inspected quickly.

According to some embodiments of the present disclosure, an inspection of the secondary battery can be performed quickly using the partial three-dimensional model without performing three-dimensional modeling of the entire secondary battery. Accordingly, a safety inspection of the secondary battery can be easily performed.

Although the embodiments have been described above as utilizing aspects of the presently disclosed subject matter in one or more standalone computer systems, the present disclosure may be implemented in conjunction with any computing environment, such as a network or distributed computing environment. Furthermore, aspects of the subject matter in the present disclosure may be implemented in a plurality of processing chips or devices, and storage may be affected similarly across a plurality of devices. These devices may include PCs, network servers, and portable devices.

Although the present disclosure has been described above with respect to embodiments thereof, the present disclosure is not limited thereto. Various modifications and variations can be made thereto by those skilled in the art within the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A method of inspecting a secondary battery (100, 310_1, 3 10_2, 3 10_3, 510), the method comprising:
receiving (S910), by a processor, a plurality of two-dimensional cross-sectional images (520_1, 520_2, 610_1, 610_2, 610_3) of a plurality of secondary batteries (100, 310_1, 310_2, 310_3, 510);
generating (S920), by the processor, a partial three-dimensional model (620, 710) for a part of each of the plurality of secondary batteries (100, 310_1, 310_2, 310_3, 510) based on the plurality of two-dimensional cross-sectional images (520_1, 520_2, 610_1, 610_2, 610_3); and
inspecting (S930), by the processor, each of the plurality of secondary batteries (100, 310_1, 3 10_2, 3 10_3, 510) based on the partial three-dimensional model (620, 710).

2. The method as claimed in claim 1, further comprising:
outputting, by the processor, an inspection result of each of the plurality of secondary batteries (100, 310_1, 310_2, 310_3, 510).

3. The method as claimed in claim 1 or 2, wherein the plurality of two-dimensional cross-sectional images (520_1, 520_2, 610_1, 610_2, 610_3) are generated by photographing the plurality of secondary batteries (100, 310_1, 310_2, 310_3, 510) without rotating the plurality of secondary batteries (100, 310_1, 310_2, 310_3, 510).

4. The method as claimed in claim 3, wherein the plurality of two-dimensional cross-sectional images (520_1, 520_2, 610_1, 610_2, 610_3) comprises first two-dimensional cross-sectional images generated by photographing the plurality of secondary batteries (100, 310_1, 310_2, 310_3, 510) and second two-dimensional cross-sectional images obtained by copying the first two-dimensional cross-sectional images.

5. The method as claimed in any of the preceding claims, wherein the plurality of two-dimensional cross-sectional images (520_1, 520_2, 610_1, 610_2, 610_3) are generated by photographing the plurality of secondary batteries (100, 310_1, 310_2, 310_3, 510) while rotating the plurality of secondary batteries (100, 310_1, 310_2, 310_3, 510) according to a predetermined range.

6. The method as claimed in claim 5, wherein the predetermined range is based on a diameter of the plurality of secondary batteries (100, 310_1, 310_2, 310_3, 510).

7. The method as claimed in claim 5 or 6, wherein the partial three-dimensional model (620, 710) represents a partial three-dimensional shape of each secondary battery of the plurality of secondary batteries (100, 310_1, 310_2, 310_3, 510) associated with the predetermined range.

8. The method as claimed in any of the preceding claims, wherein the plurality of two-dimensional cross-sectional images (520_1, 520_2, 610_1, 610_2, 610_3) comprises first two-dimensional cross-sectional images generated by photographing an upper portion of each of the plurality of secondary batteries (100, 310_1, 310_2, 310_3, 510) and second two-dimensional cross-sectional images generated by photographing a lower portion of each of the plurality of secondary batteries (100, 310_1, 310_2, 310_3, 510).

9. The method as claimed in any of the preceding claims, wherein the plurality of two-dimensional cross-sectional images (520_1, 520_2, 610_1, 610_2, 610_3) are X-ray images of the plurality of secondary batteries (100, 310_1, 310_2, 310_3, 510).

10. The method as claimed in any of the preceding claims, wherein the inspecting comprises:
obtaining cross-sectional inspection images (720) of the plurality of secondary batteries (100, 310_1, 310_2, 310_3, 510) based on the partial three-dimensional models (620, 710); and
inspecting each of the plurality of secondary batteries (100, 310_1, 310_2, 310_3, 510) based on the cross-sectional inspection images (720).

11. The method as claimed in any of the preceding claims, wherein inspecting each of the plurality of secondary batteries (100, 310_1, 310_2, 310_3, 510) comprises inspecting an overhang based on a difference between a length of a cathode plate and a length of an anode plate of each of the plurality of secondary batteries (100, 310_1, 310_2, 310_3, 510).

12. A computer-readable non-transitory recording medium having recorded thereon instructions for executing the method according to any of the preceding claims on a computer.

13. A device for inspecting a secondary battery (100, 310_1, 310_2, 310_3, 510) for performing a method of any of the preceding claims, the device comprising:
a generator (320) configured to emit X-rays toward a plurality of secondary batteries (100, 310_1, 310_2, 310_3, 510);
a detector (330) facing the generator (320) with respect to the plurality of secondary batteries (100, 310_1, 310_2, 310_3, 510), the detector (330) being configured to detect the X-rays;
a two-dimensional cross-sectional image generator (410) configured to generate a plurality of two-dimensional cross-sectional images (520_1, 520_2, 610_1, 610_2, 610_3) of the plurality of secondary batteries (100, 310_1, 310_2, 310_3, 510) based on data received from the detector (330);
a three-dimensional model generator (420) configured to generate a partial three-dimensional model (620, 710) for a part of each of the plurality of secondary batteries (100, 310_1, 310_2, 310_3, 510) based on the plurality of two-dimensional cross-sectional images (520_1, 520_2, 610_1, 610_2, 610_3); and
an inspection device configured to inspect each of the plurality of secondary batteries (100, 310_1, 310_2, 310_3, 510) based on the partial three-dimensional model (620, 710).

14. The device as claimed in claim 13, wherein distances between the generator (320) and each of the plurality of secondary batteries (100, 310_1, 310_2, 310_3, 510) are a same distance.

15. The device as claimed in claim 13 or 14, further comprising:
a rotation driver (350) configured to rotate the plurality of secondary batteries (100, 310_1, 310_2, 310_3, 510) by a predetermined range,
wherein the plurality of two-dimensional cross-sectional images (520_1, 520_2, 610_1, 610_2, 610_3) are generated by photographing the plurality of secondary batteries (100, 310_1, 310_2, 310_3, 510) while rotating the plurality of secondary batteries (100, 310_1, 310_2, 310_3, 510) according to the predetermined range.
